# EUROPEAN PATENT SPECIFICATION

(11) **EP 2 076 434 B1**
(45) Date of publication and mention of the grant of the patent: **25.08.2010**
(21) Application number: 07834587.3
(22) Date of filing: 24.10.2007
(51) Int. Cl.: B64C 21/10, F15D 1/06

(54) **OBJECT WITH SURFACE FOR GENERATING MICRO SWIRLS**
OBJEKT MIT OBERFLÄCHE ZUR ERZEUGUNG VON MIKROWIRBELN
OBJET A SURFACE DE GENERATION DE MICRO-TOURBILLONS

(30) Priority: 24.10.2006 NL 1032739
(43) Date of publication of application: 08.07.2009
(73) Proprietor: Kick Off Ltd., Caribbean Suite, The Valley TV1 11P Anguilla (AI)
(72) Inventor: VAN MERKSTEJIN, Jacbus, Lambertus, Zermatt (CH)
(74) Representative: Vernout, Robert
(86) International application number: PCT/NL2007/000271
(87) International publication number: WO 2008/051074

(56) References cited:
- EP-A2- 1 283 163
- JP-A- 2001 050 215
- US-A- 3 741 285
- US-A- 4 650 138
- US-A1- 2004 083 938

## Description

Known from the prior art, in particular US-A-4 650 138 is an aircraft wing on which longitudinal grooves are arranged in flow direction according to the preamble of claim 1. These longitudinal grooves serve to generate micro-vortices, whereby the usual boundary layer is set into motion and whereby the air resistance of the surface is reduced.

Although such a surface gives a reasonable reduction in the air resistance, the inventor of the present invention is of the opinion that the surface according to the invention provides a considerably greater decrease in the air resistance.

The invention provides for this purpose an object according to claim 1. The claimed reduction in the air resistance is obtained when the air now flows transversely of the longitudinal direction of the grooves. These values can rise to a very high percentage, up to a maximum of 78% relative to a normal flat surface.

In a preferred aspect of the object according to the invention the width of the primary grooves lies between 100 µm and 200 µm, preferably 150 µm.

In another aspect of the object according to the invention the surface of the primary grooves is provided with a groove pattern of secondary grooves which have a width of 5 µm to 8 µm and a depth of 1 µm to 2 µm. An additional improvement in the air resistance is hereby obtained. A wave pattern is recommended.

In another preferred aspect of the object according to the invention the pattern formed by the primary grooves and ridges comprises defects. The ridges preferably rotate in the flow direction as a wave function. The wave function runs from -1 to +1. Function "0" is a straight line. These defects preferably occur in the pattern in a frequency of between 1 to 10 and 1 to 25 ridges. Another preference relates to the absence of production scales. These defects or rotations readily create vortices over the surface which set the boundary layer into motion and thus lower the air resistance.

In yet another aspect of the object according to the invention the primary grooves comprise ridge grooves which are formed in accordance with the function y=x^{z}, wherein z=0.5 to 1000 and wherein the axis of symmetry of the ridge grooves lies substantially at right angles to the lengthwise direction of the grooves, and which are half-phase shifted relative to the ridges. These ridge grooves streamline the micro-vortices over the surface, while the positive ridges drive the vortices.

These and other features are further elucidated with reference to the accompanying figures.

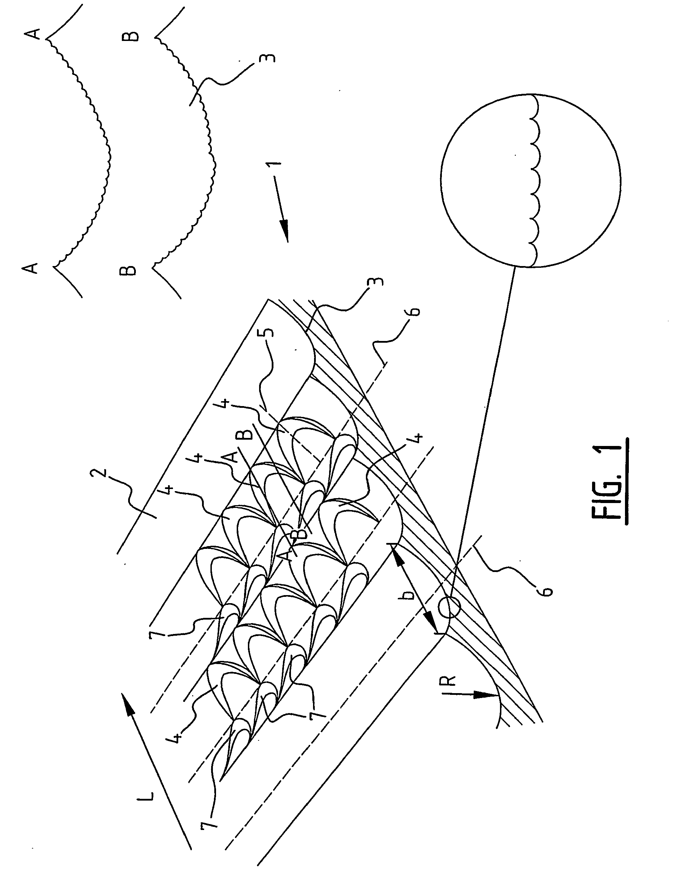

Figure 1 shows an object 1 with a surface 2 provided with a number of parallel grooves 3. These grooves have a cross-section corresponding to an arc with radius R. The width b of the grooves is preferably 150 µm.

Provided in grooves 3 are ridges 4 which have a form in accordance with the function y=x². The axis of symmetry 5 lies at right angles to longitudinal axes 6 of grooves 3.

Further provided in grooves 3 are ridge grooves 7 which are likewise formed in accordance with the function y=x² and which are half-phase shifted relative to ridges 4. A scale-like structure is hereby provided in grooves 3. When air L now flows along surface 2 of object 1, ridges 4 and ridge grooves 7 ensure that micro-vortices are created which provide for a drastic reduction in the air resistance of object 1 (for instance by 78%).

Along the line A-A the form of production scale 4 with fine wave structure is shown in its surface. Line B-B shows this for a feed scale which has a bubble surface with a fine wave structure.

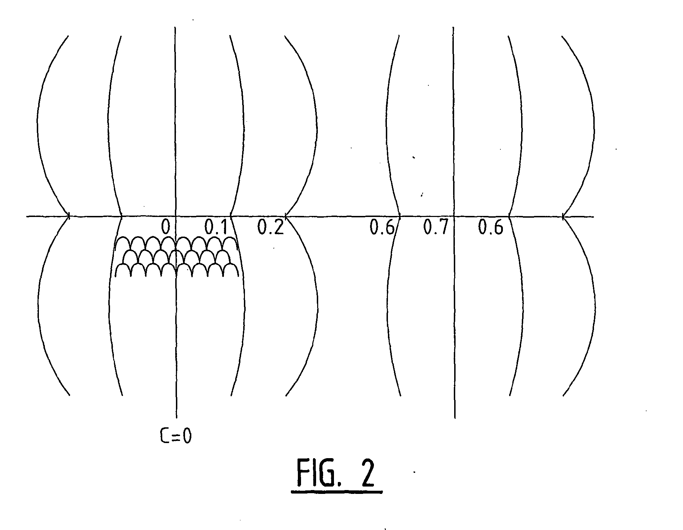

Figure 2 shows another orientation of the scales in a wave pattern.

## Claims

1. Object (1) comprising a surface (2) provided with parallel primary grooves (3), each comprising an arcuate cross-section, wherein in the primary grooves (3) are arranged ridges (4),
**Characterized in that**
the ridges (4) are formed in accordance with the function y=x^{z}, wherein z=0.5 to 1000 and wherein the axis of symmetry (5) of the ridges (4) lies at right angles to longitudinal axes (6) of the primary grooves (3).

2. Object (1) as claimed in claim 1, wherein the width of the primary grooves (3) lies between 100 µm and 200 µm, preferably 150 µm.

3. Object (1) as claimed in claim 1 or 2, wherein the surface of the primary grooves (3) is provided with a groove pattern of secondary grooves which have a width of 5 µm to 8 µm and a depth of 1 µm to 2 µm.

4. Object (1) as claimed in any of the foregoing claims, wherein the pattern formed by the primary grooves (3) and ridges (4) comprises defects.

5. Object (1) as claimed in claim 4, wherein between 1 to 10 and 1 to 25 ridges (4) are absent from the pattern.

6. Object (1) as claimed in any of the foregoing claims, wherein the primary grooves (3) comprise ridge grooves (7) which are formed in accordance with the function y=x^{z}, wherein z=0.5 to 1000 and wherein the axis of symmetry of the ridge grooves (7) lies substantially at right angles to the lengthwise direction of the grooves (3), and which are half-phase shifted relative to the ridges (4)

## Patentansprüche

1. Objekt (1), aufweisend eine Oberfläche (2), die mit parallelen primären Nuten (3) ausgestattet ist, von denen jede einen bogenförmigen Querschnitt aufweist, wobei in den primären Nuten (3) Rippen (4) angeordnet sind,
**dadurch gekennzeichnet, dass**
die Rippen (4) gemäß der Funktion y = x^{z} ausgeformt sind, wobei z = 0,5 bis 1000 ist und wobei die Symmetrieachse (5) der Rippen (4) in rechten Winkeln zu Längsachsen (6) der primären Nuten (3) liegt.

2. Objekt (1), wie in Anspruch 1 beansprucht, wobei die Breite der primären Nuten (3) zwischen 100 µm und 200 µm, vorzugsweise bei 150 µm liegt.

3. Objekt (1), wie in Anspruch 1 oder 2 beansprucht, wobei die Oberfläche der primären Nuten (3) mit einem Nutmuster aus sekundären Nuten ausgestattet ist, die eine Breite von 5 µm bis 8 µm und eine Tiefe von 1 µm bis 2 µm haben.

4. Objekt (1), wie in irgendeinem der vorangehenden Ansprüche beansprucht, wobei das Muster, das von den primären Nuten (3) und den Rippen (4) gebildet wird, Defekte aufweist.

5. Objekt (1), wie in Anspruch 4 beansprucht, wobei zwischen 1 bis 10 und 1 bis 25 Rippen (4) in dem Muster fehlen.

6. Objekt (1), wie in irgendeinem der vorangehenden Ansprüche beansprucht, wobei die primären Nuten (3) Ripp-Nuten (7) aufweisen, die gemäß der Funktion y = x^{z} ausgeformt sind, wobei z = 0,5 bis 1000 ist und wobei die Symmetrieachse (5) der Ripp-Nuten (7) im Wesentlichen in rechten Winkeln zu der Längsrichtung der Nuten (3) liegt, und die in Bezug auf die Rippen (4) um eine halbe Phase versetzt sind.

## Revendications

1. Objet (1) comprenant une surface (2) munie de rainures principales parallèles (3), chacune comprenant une section transversale arquée, où dans les rainures principales (3) sont agencées des nervures (4),
**caractérisé en ce que** les nervures (4) sont formées selon la fonction y = x^{z}, où z = 0,5 à 1000 et où l'axe de symétrie (5) des nervures (4) repose à angle droit par rapport aux axes longitudinaux (6) des rainures principales (3).

2. Objet (1) selon la revendication 1, où la largeur des rainures principales (3) est comprise entre 100 µm et 200 µm, de préférence 150 µm.

3. Objet (1) selon la revendication 1 ou 2, où la surface des rainures principales (3) est munie d'un motif de rainures de rainures secondaires qui ont une largeur de 5 µm à 8 µm et une profondeur de 1 µm à un 2 µm.

4. Objet (1) selon l'une quelconque des revendications précédentes, où le motif formé par les rainures principales (3) et les nervures (4) comprend des défauts.

5. Objet (1) selon la revendication 4, où entre 1 à 10 et 1 à 25 nervures (4) sont absentes du motif.

6. Objet (1) selon l'une quelconque des revendications précédentes, où les rainures principales (3) comprennent des rainures à nervures (7) qui sont formées selon la fonction y = x^{z}, où z = 0,5 à 1000 et où l'axe de symétrie des rainures à nervures (7) repose sensiblement à angle droit par rapport à la direction longitudinale des rainures (3), et qui sont décalées d'une demie phase par rapport aux nervures (4).
